# DEMANDE DE BREVET EUROPEEN

(11) **EP 4 183 819 A1**
(43) Date de publication de la demande: **24.05.2023**
(21) Numéro de dépôt: 22206747.2
(22) Date de dépôt: 10.11.2022
(51) Int. Cl.: C08J 3/16, C02F 1/28, C10J 3/46, C10L 5/14, C10L 5/36, C10L 5/44

(54) **PROCEDE DE TRAITEMENT DE LA BIOMASSE EN VUE DE SON INJECTION DANS UN REACTEUR DE GAZEIFICATION**

(30) Priorité: 19.11.2021 FR 2112264
(71) Demandeur: Commissariat à l'énergie atomique et aux énergies alternatives, 75015 Paris (FR)
(72) Inventeur: DEMEY CEDENO, Hary, 38054 GRENOBLE CEDEX 09 (FR); CHATAING, Thierry, 38054 GRENOBLE CEDEX 09 (FR); MARCHAND, Muriel, 38054 GRENOBLE CEDEX 09 (FR); RATEL, Gilles, 38054 GRENOBLE CEDEX 09 (FR)
(74) Mandataire: Brevalex

(57) **Abrégé**

Procédé de traitement de la biomasse pour fabriquer des billes de biomasse adaptées à une mise en œuvre dans un procédé de gazéification, le procédé comprenant les étapes suivantes :
a) fournir une poudre de biomasse, par exemple une poudre d'écorce de bois, la taille des particules de la poudre de biomasse étant de préférence inférieure à 200µm,
b) fournir une solution d'alginate comprenant de l'eau et de l'alginate, par exemple de l'alginate de potassium ou de l'alginate de sodium,
c) ajouter la poudre de biomasse à la solution d'alginate et mélanger, moyennant quoi on forme une suspension colloïdale,
d) ajouter goutte à goutte la suspension colloïdale à un bain de coagulation ionotropique comprenant des ions multivalents, moyennant quoi on forme des billes de biomasse.

## Description

### DOMAINE TECHNIQUE

La présente invention se rapporte au domaine général de la mise en forme de poudres issues de biomasses (brutes ou traitées par conversion thermochimique).

L'invention concerne un procédé de traitement de la biomasse et déchets pour les agglomérer sous forme de « billes ».

L'invention concerne également des billes de biomasse ainsi obtenues.

L'invention concerne également un procédé de gazéification de biomasse mettant en œuvre de telles billes.

L'invention concerne également l'utilisation de telles billes en tant que produits adsorbants mis en œuvre dans le traitement de l'eau.

L'invention est particulièrement intéressante puisqu'elle permet de former des billes de biomasse de diamètre calibré, et de rapport d'aspect proche de 1 (forme quasi parfaitement sphérique). Ces billes présentent de bonnes propriétés de coulabilité et peuvent être stockées sans risque d'explosion ou de compaction.

L'invention trouve des applications dans de nombreux domaines industriels, notamment pour la gazéification de la biomasse (par exemple poussières et autres déchets carbonés de taille fine dans l'industrie, par exemple dans l'industrie papetière) ou encore pour la dépollution/décontamination de l'eau, de l'air et plus généralement des gaz comme le H₂S, polluant des gaz de méthanisation.

### ÉTAT DE LA TECHNIQUE ANTÉRIEURE

Afin de faire face à la dépendance énergétique aux hydrocarbures fossiles, une des solutions les plus prometteuses est la production de gaz de synthèse (Syngaz) et de molécules d'intérêt à partir de la biomasse et/ou de déchets carbonés (ressource).

La valorisation de produits carbonés (biomasse et déchets) peut être effectuée par un procédé de gazéification (thermo-conversion) dans un réacteur à flux entrainé (RFE). Ce procédé consiste à gazéifier la ressource, typiquement à des températures allant de 900 °C à 1400°C et des pressions allant de 1 à 30 bar, pour obtenir un gaz de synthèse composé essentiellement de monoxyde de carbone (CO), de dihydrogène (H₂) et de dioxyde de carbone (CO₂). A partir de CO et d'H₂, il est alors possible d'obtenir des chaînes d'hydrocarbures CH₂ semblables à celles provenant des hydrocarbures d'origine fossile et ainsi fabriquer un carburant de synthèse. Le carbone est ainsi valorisé sous forme de méthane ou de syngaz pour produire des carburants.

Le procédé de gazéification permet également de co-générer de la chaleur et de l'électricité.

Classiquement, avant de mettre en œuvre l'étape de gazéification, la ressource est prétraitée mécaniquement, à travers une étape de broyage pour adapter la taille des particules au système de convoyage et d'injection des réacteurs de gazéification (typiquement inférieure à 2mm). Cette étape est réalisée au moyen des différentes technologies de broyage, par exemple broyeur à couteaux, à marteaux, à chaine, etc.

L'étape de broyage conduit également à la formation de particules fines (<200 µm). Les poudres fines contenant des composants ligno-cellulosiques sont cohésives et allongées, ce qui conduit à des difficultés d'écoulement à cause de l'attraction électrostatique (forces de Van der Waals) entre les parois des réacteurs et la poudre. Ces fines particules, généralement difficiles à convoyer, augmentent aussi les risques ATEX (atmosphère explosive) et occasionnent des problèmes de blocage dans tout le système, conduisant à l'arrêt du procédé.

Pour éviter ces inconvénients, les particules fines (<200 µm) sont séparées des autres particules par des équipements de criblage industriel et elles ne sont en général peu ou pas valorisées.

Or, la fraction des fines peut ainsi représenter de 20 à 50 % massique de la matière broyée (en fonction de la sévérité du broyage et de la friabilité de la ressource).

Il est donc essentiel de pouvoir valoriser cette poudre fine, par exemple en la transformant en granulés.

Afin de pouvoir être utilisés dans un réacteur de gazéification, les granulés doivent avoir un diamètre compris entre 200µm et 3mm. Les poudres fines de tailles de particules inférieures à 200 µm présentent des problèmes de blocage. Les poudres de dimensions supérieures à 3 mm ont de faibles rendements de thermo-conversion car les temps de séjour de l'intrant dans le réacteur sont courts (quelques secondes).

Différentes techniques existent pour former des granulés à partir de particules fines, notamment la granulation humide.

Par exemple, dans le document FR 3 059 008 A1, des granulés sont obtenus à partir d'un procédé de granulation humide de la biomasse. Le procédé comprend les étapes suivantes :
- séchage de la biomasse,
- broyage de la biomasse,
- granulation humide de la biomasse en présence d'un liant, notamment de l'amidon, moyennant quoi des granulés humides sont formés,
- séchage pour obtenir des granulés secs et, éventuellement, tamisage.

Les granulés sont ensuite injectés dans un réacteur de gazéification. Des résultats satisfaisants concernant la coulabilité des granulés ont été obtenus. Toutefois ce procédé présente quelques inconvénients : la taille des particules des granulés n'est pas homogène, d'où la mise en œuvre d'une étape de tamisage (taille de tamis: 900 µm), et une étape de séchage est nécessaire (étalement en fines couches des granulés puis étuve à température ambiante pendant 8h), ce qui complexifie le procédé. De plus, les granulés se désagrègent facilement, ce qui représente un problème pour leur transport et convoyage dans les installations de gazéification.

Dans d'autres domaines techniques, notamment celui de l'industrie alimentaire ou de la pharmacie, il existe des procédés d'encapsulation pour former des billes à structure cœur liquide/coquille de gélifiant. Par exemple, dans le document FR 2964017 A1, le procédé comprend les étapes suivantes :
- convoyage séparé dans une double enveloppe d'une première solution liquide contenant le premier produit (principe actif) et d'une seconde solution liquide contenant un poly-électrolyte liquide à gélifier, par exemple de l'alginate,
- formation d'une série de gouttes comprenant chacune, un noyau central contenant le principe actif, et un film périphérique recouvrant entièrement le noyau central,
- une mise en contact de la goutte, formée dans un volume gazeux à la sortie de la double enveloppe, avec une solution gélifiante.
- immersion de chaque goutte dans une solution gélifiante contenant un réactif apte à réagir avec l'électrolyte du film.

Les capsules obtenues contiennent un cœur liquide et une surface externe gélifiée. Or, de telles capsules sont fragiles (faible tenue mécanique dans le temps). De plus, elles ont un taux d'humidité élevé (typiquement supérieur à 80 %m) et ne peuvent donc pas permettre d'obtenir un bon rendement énergétique dans un réacteur de gazéification type réacteur à flux entrainé (RFE).

De plus, les billes produites par ce procédé sont de tailles submillimétriques (taille des particules inférieures à 500 µm). Une étape de séchage de ces billes implique une réduction de taille de particule (effet synérèses des gels), qui peut devenir inférieure à 200 µm, ceci n'est pas adapté à une installation de gazéification, type RFE.

Finalement, un tel procédé est un procédé de fabrication en batch, et le bain de gélification n'est pas recyclable, ce qui complique la production à l'échelle industrielle.

### EXPOSÉ DE L'INVENTION

Un but de la présente invention est de proposer un procédé de traitement de la biomasse conduisant à la formation de billes de biomasse ayant des dimensions adaptées pour une mise en œuvre dans un procédé de gazéification et conduisant à un bon rendement de gazéification, le procédé devant être simple à mettre en œuvre, peu coûteux et avec un impact faible, voire nul, sur l'environnement, y compris dans le cadre d'une mise en œuvre à une échelle industrielle.

Pour cela, la présente invention propose un procédé de traitement de la biomasse pour fabriquer des billes adaptées à une mise en œuvre dans un procédé de gazéification, le procédé comprenant les étapes suivantes :
a) fournir une poudre de biomasse, par exemple une poudre d'écorce de bois, la taille des particules de la poudre de biomasse étant de préférence inférieure à 200µm,
b) fournir une solution d'alginate comprenant de l'eau et de l'alginate, par exemple de l'alginate de potassium ou de l'alginate de sodium,
c) ajouter la poudre de biomasse à la solution d'alginate et mélanger, moyennant quoi on forme une suspension colloïdale,
d) ajouter goutte à goutte la suspension colloïdale à un bain de coagulation ionotropique comprenant des ions multivalents, moyennant quoi on forme
des billes de biomasse.

L'invention se différencie de l'art antérieur notamment par l'utilisation d'alginate pour former des billes de biomasse par voie humide. L'alginate est mélangé à la biomasse avant d'être injecté goutte à goutte dans un bain de coagulation ionotropique. Cette granulation par voie humide conduit à la formation de billes de distribution de tailles homogène et de diamètre calibré. Les billes sont formées d'un mélange homogène d'alginate et de biomasse (en surface et en volume).

De telles billes sont faciles à convoyer et à injecter dans les réacteurs de gazéification (ex. réacteur à flux entrainé, RFE). Les fines particules sont ainsi valorisées.

De telles billes permettent le dosage et la coulabilité des poudres dans un réacteur de gazéification, ce qui contribue à une amélioration de la gestion technique du procédé et à une meilleure conversion/valorisation de la biomasse.

L'alginate est un polysaccharide naturel obtenu à partir d'algues. L'alginate possède la particularité de former instantanément un hydrogel en présence d'ions multivalents, et notamment divalents. Les groupes carboxyles de l'alginate ont la propriété de chélater les ions divalents de charge opposée (par exemple Ca²⁺), conduisant à la formation de réseaux tridimensionnels rigides. On parle d'hydrogel "ionotropique".

Par hydrogel, on entend un réseau polymérique hydrophile pouvant absorber jusqu'à plusieurs milliers de fois sa masse sèche en eau.

Avantageusement, le bain de coagulation ionotropique est une solution aqueuse de nitrate de calcium.

Selon une variante de réalisation très avantageuse, le bain de coagulation ionotropique est une solution aqueuse de nitrate de calcium et de nitrate de potassium. L'ajout de nitrate de potassium dans le bain de coagulation améliore les effets catalytiques durant le procédé de gazéification en RFE, la thermo-conversion est améliorée.

Avantageusement, le bain de coagulation ionotropique a un pH compris entre 3 et 7.

Avantageusement, le rapport massique alginate / biomasse de la suspension colloïdale est compris entre 0,01 %m et 50 %m, de préférence entre 1 %m et 10 %m, par exemple 1%m.

Avantageusement, l'étape d) est réalisée au moyen d'une buse d'injection, ayant de préférence un orifice de sortie de 1mm à 20mm de diamètre. L'utilisation d'une buse diminue la largeur de la distribution granulométrique : il y a moins de réarrangements possibles entre les grains, une augmentation de la porosité et une diminution de la compaction. Ceci présente un intérêt pour la coulabilité, en diminuant les risques de voutage/blocage.

Avantageusement, le procédé comporte une étape e) ultérieure au cours de laquelle on sèche les particules de biomasse, par exemple avec de l'air pulsé, de préférence à une température comprise entre 20°C et 30°C. Cette étape est particulièrement avantageuse lorsque les billes sont utilisées dans un procédé de gazéification en voie sèche.

Avantageusement, le procédé est réalisé en continu :
- l'étape a) est réalisée dans un premier réacteur,
- l'étape b) est réalisée dans un deuxième réacteur, le premier réacteur et le deuxième réacteur étant en communication fluidique avec un réservoir de mélange,
- l'étape c) est réalisée dans le réservoir de mélange, en communication fluidique avec une buse d'injection disposée en regard d'une cuve contenant le bain ionotropique, la cuve étant avantageusement munie d'une sonde pH, la cuve étant munie d'une sortie disposée en regard d'un élément muni d'une multitude d'ouvertures, configuré pour évacuer les billes vers un dispositif de séchage et permettant de récupérer à travers les ouvertures une phase liquide, la phase liquide étant avantageusement réinjectée dans la cuve.

Ce procédé en continu est simple à mettre en œuvre et les différents éléments de l'installation sont faciles d'utilisation. Tout le procédé peut être réalisé à température ambiante (typiquement à une température entre 20 et 25°C) et à pression ambiante (typiquement à une pression de 1bar).

Le procédé présente de nombreux avantages, et notamment un ou plusieurs des avantages suivants :
- la poudre fine de biomasse est distribuée de manière homogène au sein des billes,
- obtenir des billes de taille micrométrique (typiquement supérieures à 50µm et de préférence supérieures à 200µm) et de préférence de taille millimétrique, ce qui limite les problèmes liés à la manutention et au convoyage de poudres fines : blocages, risques sanitaires (notamment cancers associés aux poudres de bois ou risque maladie d'Alzheimer et/ou pulmonaires) et ATEX (risque d'explosion lié aux poudres...),
- modifier l'état de surface des billes : les billes sont plus lisses, ce qui diminue le frottement poudre-poudre et poudre-paroi, évitant ainsi les blocages/voutes/consolidations,
- modifier les mécanismes d'interactions particulaires (forces électrostatiques, forces de Van der Walls...) dépendants de la taille des particules ; ce qui conduit à une amélioration de la coulabilité des particules fines,
- l'agglomération des billes ne nécessite aucune intervention extérieure (le phénomène se produit seul) et la dépense énergétique liée à cette agglomération est nulle,
- ne pas avoir de consolidation forte au sein des billes, ce qui facilite le délitage en réacteur) : la bille peut se détruire facilement en RFE où les temps de séjour sont courts car les particules ne sont pas fortement compactées,
- les propriétés des particules ne sont pas modifiées par le mécanisme d'agglomération et une fois libérées elles ont le même comportement en gazéification que si elles n'avaient pas été agglomérées en billes.

L'invention concerne également des billes de biomasse adaptées à une mise en œuvre dans un procédé de gazéification. Les billes de biomasse, obtenues à partir du procédé précédemment décrit, sont rigides.

Avantageusement, la bille de biomasse comprend un mélange homogène d'alginate et de biomasse. De préférence la biomasse est de l'écorce de bois.

La composition de la bille est homogène en surface et en volume. Les billes obtenues n'ont pas une structure cœur/coquille. L'alginate et la poudre de biomasse se retrouve dans tout le volume de la bille.

Avantageusement, le rapport d'aspect de la bille est proche de 1 (forme quasi parfaitement sphérique). Ceci réduit considérablement les problèmes de convoyage dus à l'interaction entre les billes du fait de leur morphologie (aspérités favorisant les accrochages mais aussi possibilités de réarrangements de grains dans les interstices).

Avantageusement, la bille a un diamètre compris entre 1mm et 20mm.

Les billes peuvent contenir en outre des espèces inorganiques (du calcium et, de préférence, du potassium) favorisant la cinétique de gazéification par effet catalytique.

Les billes de biomasse ainsi obtenues présentent de nombreuses propriétés : facilité de stockage et de manutention, meilleure coulabilité.

L'invention concerne également un procédé de gazéification comprenant une étape au cours de laquelle on gazéifie des billes de biomasse telles que définies précédemment, dans un réacteur de gazéification, notamment un réacteur de gazéification à flux entrainé.

Les billes de biomasse peuvent être brutes, torréfiées, pyrolysées ou carbonisées.

L'utilisation de telles billes facilite la mise en œuvre du procédé de gazéification (et notamment des étapes de convoyage et d'injection) par rapport à des procédés utilisant des poudres fines de biomasse ou des pâtes de biomasse et augmente ainsi la rentabilité du procédé de gazéification.

Il permet de gazéifier des poudres fines de biomasse (taille des particules <200 µm) transformées en billes de biomasse (taille comprise par exemple entre 200µm et 3mm) et d'augmenter ainsi la rentabilité puisque toutes les poudres peuvent être gazéifiées.

Le liant naturel issu lui-même de la biomasse se volatilise facilement en réacteur : la bille peut se déliter sur quelques secondes en RFE et les particules fines sont libérées et gazéifiées ; le liant peut participer lui-même au rendement de la gazéification.

L'alginate peut avoir un impact sur la morphologie et la structure de la paroi des billes formées, pouvant favoriser la pénétration des gaz réactifs pendant la gazéification.

Les billes contiennent moins de soufre en proportion par rapport à la poudre brute de biomasse, ce qui réduit les phénomènes d'empoisonnement des catalyseurs lors de la gazéification.

L'invention concerne également l'utilisation de billes de biomasse, telles que définies précédemment, par exemple des billes d'écorce de bois, en tant que produits adsorbants mis en œuvre dans le traitement de l'eau. Les billes forment un média filtrant pour l'adsorption de polluants en effluents liquides. Elles peuvent également former un média filtrant pour l'adsorption de polluants en effluents gazeux.

Une augmentation de la porosité du lit peut favoriser l'interaction entre le fluide à traiter et le média filtrant. Si les particules sont trop imbriquées, il y a un risque que le fluide ne circule pas correctement dans le média filtrant.

D'autres caractéristiques et avantages de l'invention ressortiront du complément de description qui suit.

Il va de soi que ce complément de description n'est donné qu'à titre d'illustration de l'objet de l'invention et ne doit en aucun cas être interprété comme une limitation de cet objet.

### BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels :
La figure 1 représente un protocole de fabrication de billes de biomasse selon un mode de réalisation particulier de l'invention.
La figure 2 représente de manière schématique une ligne pilote de production des billes en continu (capacité: 100 kg/h), selon un autre mode de réalisation particulier de l'invention.
Les figures 3A et 3B sont des clichés photographiques représentant des billes de biomasse humides produites à partir d'une poudre d'écorce de bois, selon un autre mode de réalisation particulier de l'invention.
Les figures 4A et 4B sont des clichés photographiques représentant des bains de coagulation ionotropique contenant des billes de biomasse humides produites à partir d'une poudre d'écorce de bois, selon un autre mode de réalisation particulier de l'invention.
La figure 5A est un graphique représentant la distribution de la taille des particules de la poudre fine d'écorce de bois.
La figure 5B est un graphique représentant la distribution de la taille des billes d'écorce, obtenues à partir d'une poudre fine d'écorce de bois, selon un autre mode de réalisation particulier de l'invention.
La figure 6A est un cliché photographique représentant des particules d'une poudre fine de biomasse.
La figure 6B est un cliché photographique représentant des billes humides produites à partir de la poudre d'écorce de bois, représentée sur la figure 6A, selon un autre mode de réalisation particulier de l'invention.
La figure 6C est un cliché photographique représentant des billes sèches produites à partir de la poudre d'écorce de bois, représentée sur la figure 6A, selon un autre mode de réalisation particulier de l'invention.
La figure 7 représente de manière schématique un angle d'avalanche.
Les figures 8A, 8B et 8C représentent des angles d'avalanche d'une poudre de biomasse.
Les figures 8D, 8E et 8F représentent des angles d'avalanche de billes en verre.
Les figures 8G, 8H et 8I représentent des angles d'avalanche de billes de biomasse, selon un mode de réalisation particulier de l'invention.
La figure 9 est un cliché obtenu au microscope électronique à balayage d'une bille de biomasse, selon un mode de réalisation particulier de l'invention.
Les figures 10A et 10B sont des clichés obtenus au microscope électronique à balayage de l'intérieur d'une bille de biomasse, selon un mode de réalisation particulier de l'invention.
La figure 11 est un graphique représentant le pourcentage en masse et la température en fonction du temps pour des essais de gazéification sur une poudre d'écorce de bois et sur des billes de biomasse d'écorce de bois obtenues selon un mode de réalisation particulier de l'invention.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

En outre, dans la description ci-après, des termes qui dépendent de l'orientation, tels que « dessus », « dessous », etc. d'un dispositif s'appliquent en considérant que la structure est orientée de la façon illustrée sur les figures.

### EXPOSÉ DÉTAILLÉ DE MODES DE RÉALISATION PARTICULIERS

Par la suite, même si la description fait référence à la biomasse issue de l'industrie forestière et agricole, l'invention est transposable à d'autres types de biomasse, par exemple des déchets alimentaires, déchets ménagers, déchets agricoles, des micro-plastics, des nanoparticules, des particules fines issues des procédés industriels, noir de carbone, boues de station d'épuration, etc. Elle peut concerner aussi des matériaux bruts ou issus de la conversion thermochimique de la biomasse, comme par exemple les fines particules issues d'un procédé de carbonisation. L'invention est intéressante pour récupérer des poussières et autres déchets de petites dimensions (typiquement inférieures à 200µm), faciliter leur stockage et leur évacuation (ex : bain de trempe ou cyclone en réacteur de gazéification, scieries etc...).

Bien que cela ne soit aucunement limitatif, l'invention trouve particulièrement des applications pour valoriser les fines poudres d'écorce de bois.

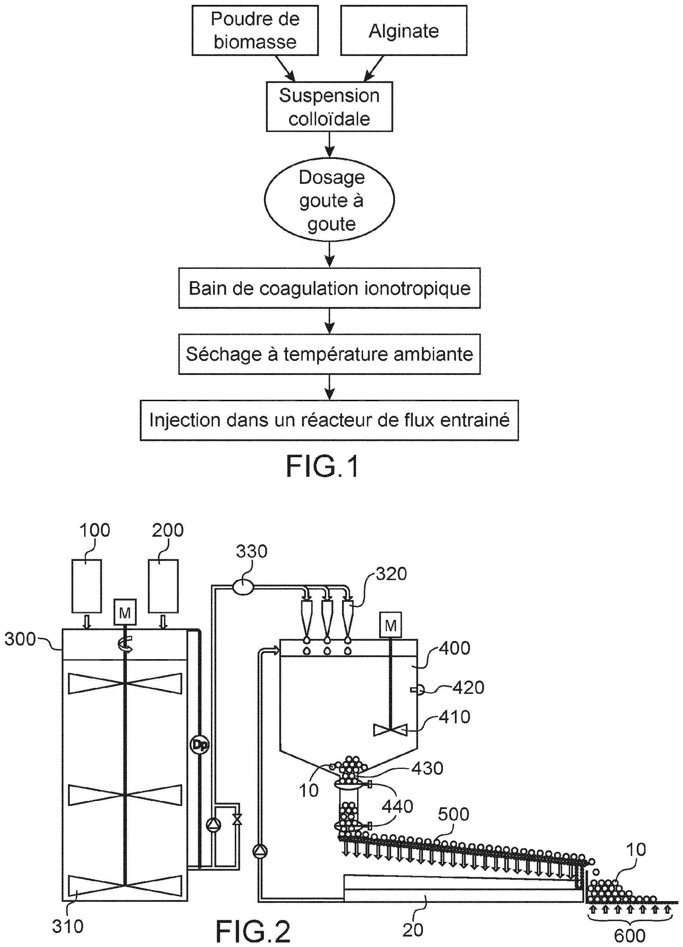

Le procédé de traitement de la biomasse comprend les étapes suivantes (figure 1) :
a) fournir une poudre de biomasse,
b) fournir une solution d'alginate comprenant de l'eau et de l'alginate, par exemple de l'alginate de potassium ou de l'alginate de sodium,
c) ajouter la poudre de biomasse à la solution d'alginate et mélanger, moyennant quoi on forme une suspension colloïdale,
d) ajouter goutte à goutte la suspension colloïdale à un bain de coagulation ionotropique comprenant des ions multivalents, moyennant quoi on forme des billes de biomasse.
e) éventuellement sécher les particules de biomasse, par exemple avec de l'air pulsé, de préférence à une température comprise entre 20°C et 30°C.

La poudre de biomasse fournie à l'étape a) comprend des particules de biomasse. La taille des particules est de préférence inférieure à 1000µm, encore plus préférentiellement inférieure à 200µm. La taille des particules est par exemple comprise entre 1nm et 1000µm, de préférence entre 10nm et 200µm.

Dans le cadre de cette invention, le terme biomasse implique tout matériau (homogène et inhomogène) d'origine végétale et/ou animale contenant du carbone, tel que la biomasse des résidus forestiers, agricoles, déchets ménagers, déchets de pneus, noir de carbone, boues d'épuration, déchets d'os d'animaux, etc. Toutes ces ressources peuvent être sèches ou humides.

La biomasse peut également faire référence à de la biomasse traitée par différents procédés de thermo-conversion, tels que par exemple la torréfaction, la pyrolyse, la carbonisation hydrothermale, la liquéfaction hydrothermale et/ou résidus carbonés. Par exemple, le terme biomasse fait également référence aux biochars (pyrolyse), biocoals (torréfaction), hydrochars (carbonisation hydrothermale) et chars (gazéification).

La poudre de biomasse est de préférence une poudre d'écorce de bois.

La solution d'alginate fournie à l'étape b) est par exemple une solution contenant une teneur massique en alginate allant de 0,01 %m à 50 %m, de préférence de 1 %m à 10 %m. De préférence, l'alginate est de l'alginate de sodium : il s'agit d'un réactif peu cher et largement commercialisé.

L'étape c) est par exemple réalisée sous agitation magnétique. La vitesse de rotation du mélange ainsi que la durée du mélange seront choisies par l'homme du métier. L'étape c) est réalisée jusqu'à obtenir un mélange homogène.

Le bain de coagulation ionotropique (aussi appelé bain de sphérification) est une solution aqueuse. La solution contient des ions multivalents (de préférence des ions divalents) pouvant réagir avec l'alginate pour former un polymère. Par exemple, il peut s'agir d'ions cuivre, cadmium, baryum, calcium, cobalt, nickel, fer, zinc ou manganèse.

On choisira de préférence des ions calcium. Ces ions ne sont pas toxiques et leur utilisation ne nécessite pas d'étape de purification additionnelle par rapport à d'autres ions.

Le bain de coagulation ionotropique est, par exemple, une solution de chlorure de calcium et/ou de nitrate de calcium.

Selon une autre variante de réalisation préférentielle, le bain de coagulation ionotropique contient à la fois des ions calcium et des ions potassium. Les ions potassium ont la propriété de catalyser la réaction de gazéification.

Le bain de coagulation est, par exemple, une solution de nitrate d'ions divalents et/ou de chlorure d'ions divalents. Différents nitrates d'ions divalents et/ou différents chlorure d'ions divalents peuvent être utilisés dans une même solution.

Avantageusement, on choisira une solution comprenant un ou plusieurs nitrates d'ions divalents. De nombreux ions peuvent être associés aux nitrates.

De préférence, le bain de coagulation ionotropique est une solution aqueuse de nitrate de calcium, pouvant en outre comprendre du nitrate de potassium.

De préférence, le bain de coagulation ionotropique a un pH compris entre 3 et 7. On choisira par exemple un pH de 4.

Le bain ionotropique peut également comprendre des substances pour donner des propriétés particulières aux billes, par exemple des colorants, des agents inhibiteurs et/ou accélérateurs des flammes, etc.

Le bain ionotropique peut contenir des espèces chélatant des ions multivalents et notamment les ions calcium.

Le rapport massique alginate / biomasse de la suspension colloïdale est compris entre 0,01 %m et 50 %m, de préférence entre 1 %m et 10 %m, par exemple 1 %m.

L'étape d) est réalisée au moyen d'une buse d'injection, ayant de préférence un orifice de sortie de 1 mm à 20 mm de diamètre. On choisira par exemple un diamètre de 3 mm.

L'étape e) de séchage est avantageusement réalisée à l'air à température ambiante (de 20 à 25°C typiquement). Il n'y a aucun apport d'énergie. De l'air pulsé peut être utilisé. Par exemple, des billes humides de 3 mm de diamètre ont un diamètre de 1,45 mm après séchage.

Avantageusement, tout le procédé est réalisé à température ambiante.

Selon un mode de réalisation particulièrement avantageux, le procédé est réalisé en continu. Par exemple, le procédé en continu est réalisé grâce à la ligne de production de billes de biomasse représentée sur la figure 2. Une telle installation permet d'obtenir jusqu'à 100kg/h de billes.

L'étape a) est réalisée dans un premier réacteur 100.

L'étape b) est réalisée dans un deuxième réacteur 200.

Le premier réacteur et le deuxième réacteur sont en communication fluidique avec un réservoir de mélange 300, muni d'un mélangeur 310.

L'étape c) est réalisée dans le réservoir de mélange 300.

Le réservoir de mélange 300 est en communication fluidique avec une ou plusieurs buses d'injections 320 disposées en regard d'une cuve 400 contenant le bain de coagulation ionotropique.

Un débitmètre 330 peut servir à contrôler le débit au niveau de la ou des buses 320.

La cuve 400 est avantageusement munie d'un dispositif de mélange 410 et/ou d'une sonde pH 420. La sonde pH 420 permet notamment de déterminer si la quantité d'ions divalents est toujours suffisante.

Les billes 10 tombent par gravité au fond de la cuve 400.

Avantageusement, la cuve 400 est munie d'une sortie 430 disposée en regard d'un élément de récupération 500.

Par exemple, un système de double guillotine 440 disposé en bas de la cuve permet d'évacuer une fraction du volume de la cuve 400 formée d'un phase liquide 20 et d'une phase solide (billes 10).

L'élément de récupération 500 est muni d'une multitude d'ouvertures. Les dimensions des ouvertures sont inférieures aux dimensions des billes 10. La phase liquide passe à travers les ouvertures. Les éléments solides (billes 10) sont acheminés par exemple jusqu'à un dispositif de séchage 600.

L'élément de récupération 500 peut être un plateau incliné ou un tapis de convoyage.

Le dispositif de séchage 600 fonctionne par exemple avec de l'air pulsé. La phase liquide 20 est, avantageusement, réinjectée dans la cuve 400.

Les billes obtenues avec le procédé précédemment décrit comprennent un mélange homogène d'alginate et de biomasse.

De préférence, les billes comprennent un mélange homogène d'alginate de calcium et de biomasse. Selon un autre mode de réalisation préférentiel, les billes comprennent un mélange homogène d'alginate de calcium et de potassium et de biomasse.

Les billes ont un diamètre compris entre 1mm et 20mm, par exemple 3 mm.

Le rapport d'aspect de la bille est avantageusement proche de 1.

Par rapport d'aspect proche de 1, on entend que le rapport entre la largeur et la hauteur (ou entre la plus grande dimension et la plus petite dimension) des billes formées par ce procédé est proche de 1, c'est-à-dire qu'il ne varie pas de plus 10% et de préférence il ne varie pas de plus de 5% par rapport à la valeur 1. Un rapport d'aspect proche de 1 signifie que les billes sont de forme sphérique.

Les billes obtenues sont des matériaux rigides, stables dans le temps (plusieurs années, par exemple entre 1 et 5 ans).

Les billes peuvent ensuite être valorisées dans un procédé de gazéification. Les poudres de biomasses peuvent être utilisées brutes ou torréfiées.

Le procédé de gazéification est mis en œuvre dans réacteur de gazéification, notamment un réacteur de gazéification à flux entrainé.

Le procédé de gazéification peut être réalisé en continu dans une installation comprenant un réacteur de gazéification, par exemple à flux entrainé, et en amont de celui-ci une ligne de production de billes de biomasse destinée à mettre en œuvre le procédé de traitement de la biomasse.

Alternativement, les billes peuvent être utilisées en tant que produits adsorbants mis en œuvre dans différents traitements d'effluents liquides ou gazeux (comme par exemple élimination de H₂S issu du procédé de production du biométhane par digestion anaérobique). En particulier, il peut s'agir du traitement d'effluents aqueux, par exemple des eaux industrielles. Par exemple, les billes permettent d'adsorber tout ou une partie de certains éléments présents dans les effluents aqueux. A titre illustratif, on peut citer le plomb, le zinc ou encore le nickel. On peut également citer des procédés d'épuration d'eau destinés à supprimer les particules minérales contenus dans des eaux polluées. Après une première étape de suppression des particules par filtration ou centrifugation, les particules fines peuvent être avantageusement collectées puis éliminées par le procédé de l'invention.

Les eaux sont ainsi décontaminées/dépolluées.

Exemples illustratifs et non limitatifs d'un mode de réalisation :
Production des billes en laboratoire :
Dans cet exemple, 40g de poudre de biomasse (taille de particules inférieure à 100µm) ont été ajoutés à une solution comprenant 10 g d'alginate et 990mL d'eau.

La suspension colloïdale ainsi obtenue a été mélangée pendant 30min à 300 tour/min.

La suspension colloïdale a ensuite été ajoutée goutte à goutte dans un bain de coagulation ionotropique (10g de Ca(NO₃)₂ et 990mL d'eau).

On obtient ainsi des billes de biomasse. Les billes sont séchées à température ambiante (20-25°C). Les billes peuvent ensuite être injectées dans un réacteur de gazéification à flux entrainé.

Production des billes à l'échelle industrielle :
Selon un autre exemple, on a préparé des « billes » de biomasse (<200 µm) en trois étapes sur une ligne pilote (figures 1 et 2):
- étape 1 : Un litre de solution d'alginate de sodium (1% m) est préparé par la dissolution de 10 kg d'alginate de sodium dans 990 kg d'eau dans un réacteur 200. Le mélange est agité mécaniquement à 300 tr/min pendant 1 h (pour obtenir une homogénéisation complète de la solution). Ensuite, une masse de poudre de biomasse allant de 1-100 kg (taille de particule < 200 µm) est mélangée avec la solution d'alginate sous agitation (à 300 tr/min) pendant 1h dans un réservoir de mélange 300.
- étape 2 : Le débit de l'injection du mélange d'alginate et de poudre de biomasse dans la cuve 400 contenant le bain de coagulation ionotropique (contenant 10 kg de nitrate de calcium et 10 kg de nitrate de potassium dissous dans 980 kg d'eau) est contrôlé par une pompe péristatique 330 (débit 1 m³/h). A la sortie de la pompe 330, un système des buses 320 de diamètre (Ø 3 mm) a été installé, ce qui permet le dosage des gouttes de taille régulières dans le bain de coagulation ionotropique. Le diamètre des billes souhaité peut être réglé et contrôlé en fonction du diamètre des buses (typiquement de 1 mm à 20 mm, de préférence 3 mm).
- étape 3 : Les billes formées dans le bain ionotropique ont un temps de séjour supérieur à 30 min, et ensuite sont collectées et séchées à l'air (à 22 °C) pendant 5 à 10 h. L'eau du bain ionotropique est recyclée dans le système et le pH est surveillé. Le pH initial du bain est supérieur à pH 3 et inférieur à pH 7.

Un prélèvement des billes 10, est réalisé par un sas 440 positionné au pied du bain de coagulation avec essorage gravitaire sur un plateau perforé 500 avec récupération et réinjection de l'eau collectée 20 dans le bain et collecte et séchage par circulation d'air des billes 10.

Le bain ionotropique dans la cuve 400 ainsi que la suspension colloïdale alginate/poudre de biomasse dans le réservoir de mélange 300 sont homogénéisés à l'aide d'un agitateur 410, 310 équipé de pales.

Une surveillance du niveau d'eau dans le réservoir de mélange 300 pour ajuster en continu le dosage de la poudre de biomasse et l'alginate.

Durant le procédé de formation des billes, le pH du bain augmente progressivement. Une surveillance de l'évolution du pH du bain de coagulation ionotropique est réalisée avec une sonde pH 420 (pour définir son renouvellement lorsque l'efficacité de coagulation s'effondre et impacte la qualité des billes), ainsi que des prélèvements périodiques pour quantifier par chromatographie ionique la concentration des ions calcium résiduels présents dans le bain, en fonction du temps. Le pH initial du bain est supérieur à pH 3.0 et inférieur à pH 7.0. Durant le procédé de formation des billes le pH du bain augmente progressivement, si le pH≥ 7.0, l'ajout de 10 kg de nitrate de calcium et 10 kg de nitrate de potassium complémentaires est nécessaire.

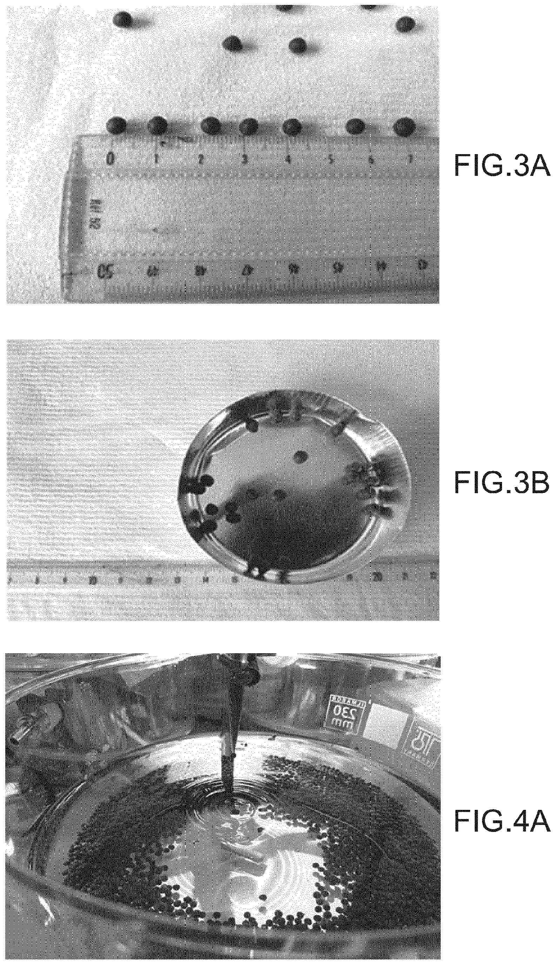

Caractérisation des dimensions des billes :
Le diamètre moyen des billes à l'issue du procédé en laboratoire était de Ø 3 mm (figures 3A et 3B). Toutefois, ce diamètre peut être réglé et contrôlé en fonction du diamètre des buses utilisées dans le procédé de fabrication (typiquement de 1 mm à 20 mm, de préférence 3 mm).

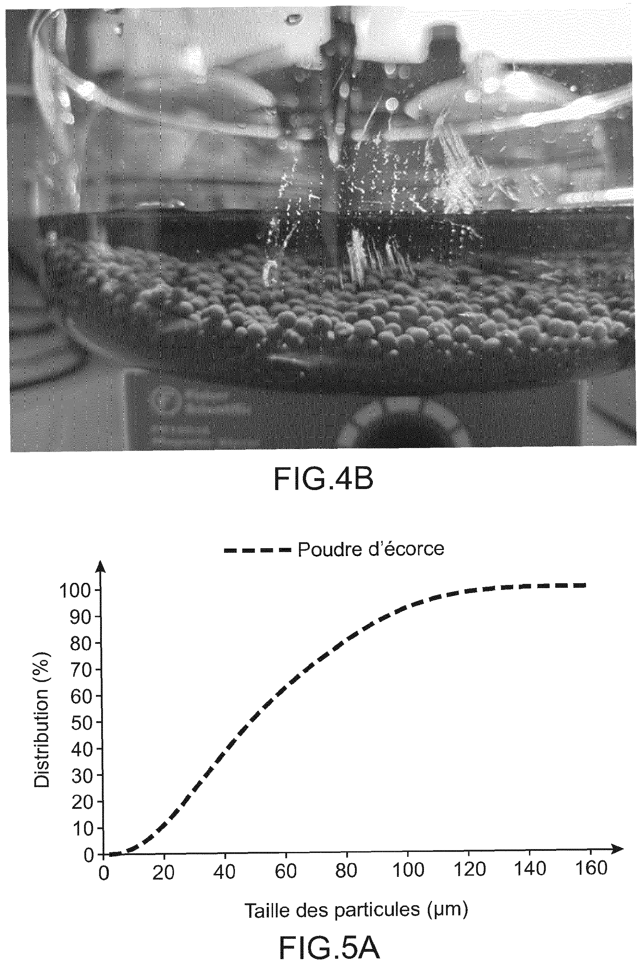

L'exemple à une échelle pilote a permis de vérifier la répétabilité des résultats obtenus (Figures 4A et 4B), les billes sont uniformes et homogènes (Ø 3 mm). Les billes humides ont été séchées à l'air (sans aucun apport d'énergie au système). La taille des billes sèches est de 1.45 mm soit deux fois inférieure à celle des billes humides.

La taille des billes sèches correspond à la taille de particule optimale pour injection dans un réacteur RFE, toutefois cette taille peut être réglée en fonction du diamètre des buses utilisées durant la fabrication (typiquement de 1 mm à 20 mm, de préférence 3 mm).

La distribution de la taille des particules de la poudre fine d'écorce de bois et des billes séchées à l'air a été vérifiée en utilisant un analyseur des particules CAMSIZER XT (fabricant: Retsch Technology).

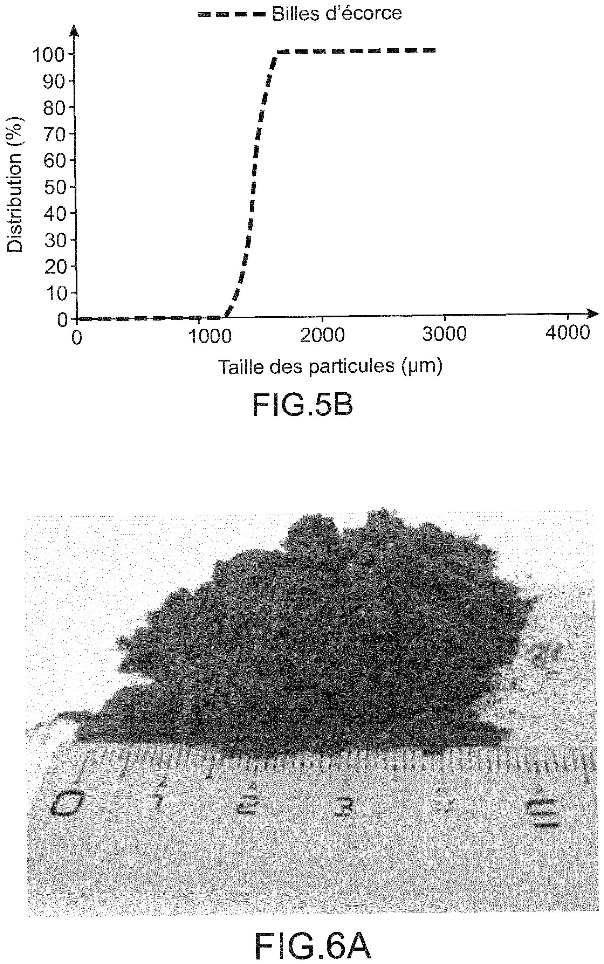

Les figures 5A et 5B montrent que le diamètre moyen (d50) des échantillons de poudre est de 48.9 µm et pour les billes séchées de 1445 µm, soit un facteur 30 par rapport à la poudre fine. La distribution de la taille des particules des billes est moins étalée que celle de la poudre fine d'écorce de bois, indiquant une distribution monodisperse pour les billes (moins étalée).

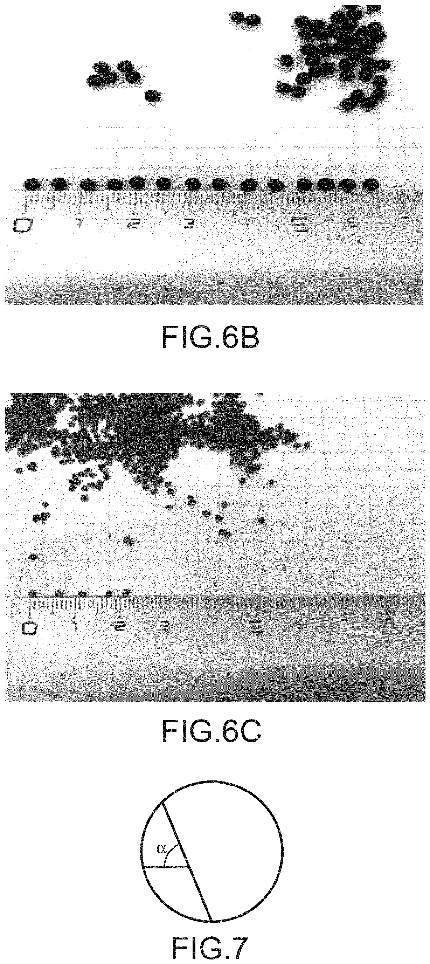

Il a été vérifié aussi que l'étape de séchage permet de réduire la taille des particules d'un facteur 2 par rapport aux billes humides fraichement produites (Figures 6A, 6B et 6C).

Composition des billes :
Les résultats de caractérisation des billes et de la poudre de biomasse (notamment d'écorce de bois) sont présentés dans le Tableau 1 suivant. Le processus de formation de billes ne modifie pas la teneur en carbone ni le pouvoir calorifique supérieur (PCS) du produit final en comparaison avec la poudre (17 MJ/kg). Néanmoins, le procédé de fabrication peut augmenter légèrement le taux de cendres de l'ordre de 2 %m, du fait de la présence des ions divalents dans le bain ionotropique.

Il est à noter que le pourcentage de soufre présent dans les billes est inférieur à celui de poudre de biomasse, ce qui est particulièrement intéressant lorsque le procédé de gazéification est réalisé en présence d'un catalyseur.

**Tableau 1 : Analyses élémentaires.**

| Analyses élémentaires | | | | | | Taux de cendres | Pouvoir calorifique supérieur |
|---|---|---|---|---|---|---|---|
| Biomasse | C (%) | H (%) | N (%) | S (%) | O (%) | (%) | (MJ kg¹) |
| Poudre d'écorce | 42.2 | 5.42 | 0.72 | 0.29 | 40.9 | 9.84 | 17.0 |
| Billes de poudre d'écorce | 42.7 | 5.71 | 0.72 | 0.18 | 39.5 | 11.87 | 16.9 |

### Tests de cohésivité (angle d'avalanche) :

Les tests de cohésivité ont été réalisés en utilisant un tambour rotatif (REVOLUTION, fabricant : Mercury Scientific Inc., USA) équipé d'une caméra adaptée qui permet la détermination de l'angle moyen d'avalanche des échantillons. L'angle d'avalanche représente l'aptitude d'une poudre libre (en absence de contraintes mécaniques autres que son propre poids) à se consolider. Plus l'angle est proche de zéro, plus la poudre « s'effondre » et s'étale sur elle-même. Plus cet angle est proche de 90°, plus la poudre a tendance à former des arches et des voutes entravant son écoulement (poudre fortement cohésive)

L'angle d'avalanche est déterminé par l'angle que forme la moitié supérieure de la surface de la poudre dans le tambour avec l'horizontal, avant une avalanche (Figure 7).

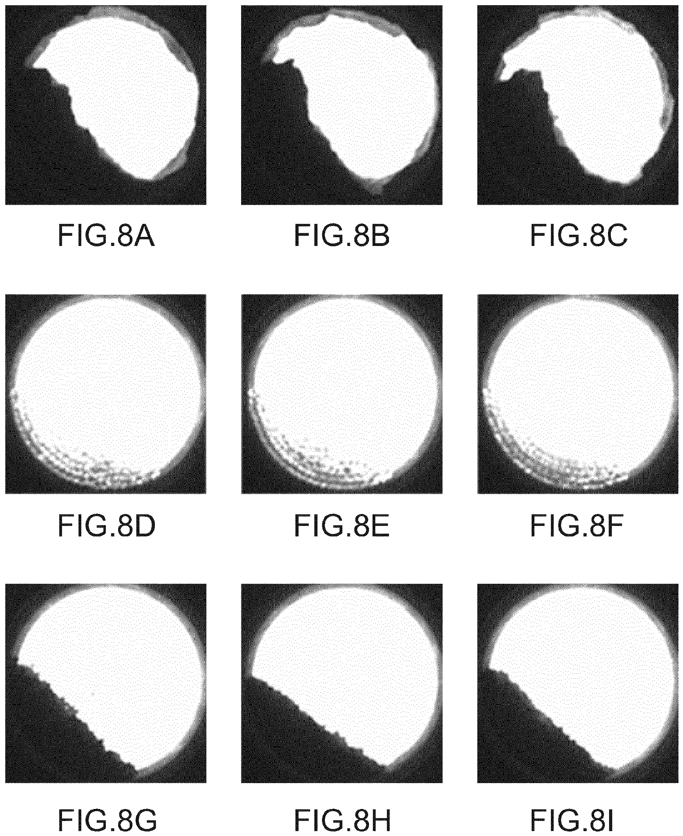

Les mesures d'angles d'avalanche ont été réalisées pour :
- une poudre de biomasse (taille de particule <200 µm) (figure 8A, 8B et 8C),
- des billes en verre de diamètre Ø 3 mm (figures 8D, 8E et 8F),
- une poudre de biomasse produite selon l'invention (Ø 3 mm) (figures 8G, 8H et 8I).

Les résultats d'angle moyen sur 1000 avalanches sont répertoriés dans le tableau 2 suivant.

La poudre de biomasse (taille de particule <200 µm) présente une forte cohésivité qui se traduit par un angle d'avalanche élevé (87.7°). Cette valeur est aussi un indicateur des possibles problèmes de blocage/convoyage fréquemment trouvés dans les procédés de gazéification. En effet, une forte cohésivité engendre une faible coulabilité de la poudre, c'est-à-dire une faible aptitude à l'écoulement sous contrainte, en injecteur par exemple.

La procédure de « sphèrification » améliore la coulabilité de la poudre, en vue d'une injection dans un réacteur à flux entrainé. Les billes d'écorce présentent un angle d'avalanche deux fois inférieur à celui de la poudre, ce qui se traduit par une meilleure coulabilité. L'angle d'avalanche des billes de biomasse (40.3°) est proche des valeurs obtenues avec les billes en verre (39.2°) et atteste de l'intérêt du procédé pour améliorer l'injection en RFE.

**Tableau 2. Angle d'avalanche (moyenne sur 1000 avalanches).**

| | | | |
|---|---|---|---|
| Angle d'avalanche | Poudre d'écorce (< 200 µm) | Billes en verre (Ø 3 mm) | Billes de poudre d'écorce (Ø 3 mm) |
| | 87.7° | 39.2 ° | 40.3 ° |

### Taux d'humidité :

Les mesures du taux d'humidité des billes séchées à l'air et à température ambiante (22°C, durant 10 h) ont été réalisées dans une étuve de laboratoire à 105 °C (durant 24h) en suivant la norme EN18134. Les résultats confirment un taux d'humidité résiduel de 1.2 %m.

Il est à noter que le taux d'humidité initial des billes fraichement préparées (qui n'ont pas subi une étape de séchage) est de 90%m. L'étape de séchage à l'air est efficace pour volatiliser la quasi-totalité de l'eau présente dans les billes ce qui permet d'économiser les coûts d'énergie dans le procédé de préparation et une meilleure gestion de la ressource en vue de son injection dans des réacteurs de gazéification.

### Morphologie de la surface des billes :

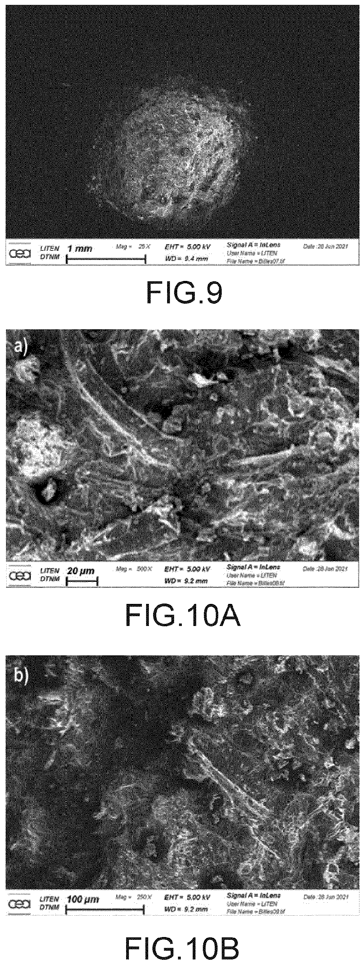

Des images avec un microscope électronique à balayage (MEB) ont été réalisées pour vérifier la structure de la surface des billes de biomasse. Les analyses confirment une structure rigide et compacte (Figure 9). La poudre de biomasse est distribuée sur toute la surface de la bille, et le biopolymère à base d'alginate fonctionne comme un lien qui facilite l'agglomération sphérique de la poudre de biomasse.

La morphologie au sein des billes a été aussi observée au microscope (en sectionnant une bille en deux moitiés, à l'aide d'un scalpel). Les images des Figures 10A et 10B montrent une surface homogène à l'intérieur de la bille, ce qui confirme une distribution totale de la poudre de biomasse dans le volume des sphères.

### Tests de gazéification :

Des essais de gazéification à la vapeur d'eau ont été réalisés dans un dispositif de thermo-conversion ATG (SETSYS, fabricant SETARAM, France), en utilisant la poudre de biomasse (notamment la poudre d'écorce de bois: taille des particules < 200 µm) et les billes de biomasse (notamment billes d'écorce de bois: taille des particules Ø 3 mm). Pour la réalisation de ces tests, le dispositif ATG a été chauffé à raison de 10 °C/min, jusqu'à 900°C. Une fois que cette température est atteinte, la gazéification thermochimique est réalisée par l'injection de vapeur d'eau durant un palier de 70 min.

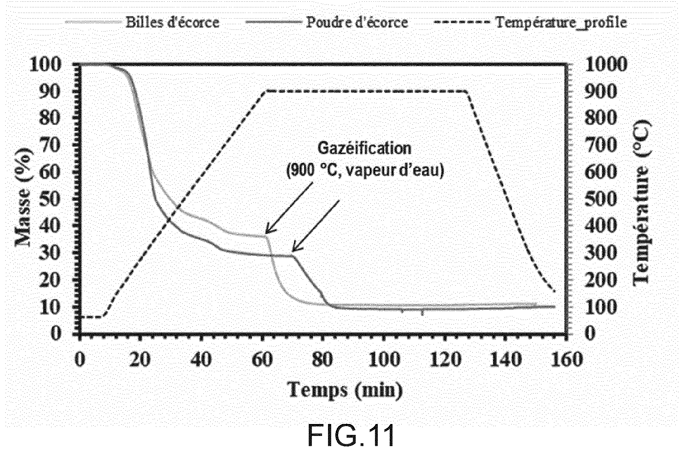

La Figure 11 présente les résultats de la perte de masse en fonction de la température durant le processus de gazéification. Les résultats de gazéification des billes (contenant des ions calcium et potassium issus du procédé de production) présentent une rampe plus raide et une cinétique de conversion plus rapide que ceux de la poudre de biomasse brute. Cela est dû à l'effet catalytique des ions calcium et potassium sur le processus.

Le procédé de production des billes améliore la coulabilité de la poudre de biomasse ainsi que sa cinétique de thermo-conversion dans un réacteur de gazéification (exemple réacteur à flux entrainé).

## Revendications

1. Procédé de traitement de la biomasse pour fabriquer des billes de biomasse adaptées pour une mise en œuvre dans un procédé de gazéification, le procédé comprenant les étapes suivantes :
a) fournir une poudre de biomasse, par exemple une poudre d'écorce de bois,
b) fournir une solution d'alginate comprenant de l'eau et de l'alginate, par exemple de l'alginate de potassium ou de l'alginate de sodium,
c) ajouter la poudre de biomasse à la solution d'alginate et mélanger, moyennant quoi on forme une suspension colloïdale,
d) ajouter goutte à goutte la suspension colloïdale à un bain de coagulation ionotropique comprenant des ions divalents, moyennant quoi on forme des billes de biomasse adaptées pour une mise en œuvre dans un procédé de gazéification.

2. Procédé selon la revendication 1, **caractérisé en ce que** le bain de coagulation ionotropique est une solution aqueuse de nitrate de calcium.

3. Procédé selon la revendication 1, **caractérisé en ce que** le bain de coagulation ionotropique contient des ions calcium et des ions potassium.

4. Procédé selon la revendication 1 ou 3, **caractérisé en ce que** le bain de coagulation ionotropique est une solution aqueuse de nitrate de calcium et de nitrate de potassium.

5. Procédé selon l'une quelconque des revendications précédentes, **caractérisé en ce que** le procédé comporte une étape e) ultérieure au cours de laquelle on sèche les particules de biomasse, par exemple avec de l'air pulsé, de préférence à une température comprise entre 20°C et 30°C.

6. Procédé selon l'une quelconque des revendications précédentes, **caractérisé en ce que** le bain de coagulation ionotropique a un pH compris entre 3 et 7.

7. Procédé selon l'une quelconque des revendications précédentes, **caractérisé en ce que** le rapport massique alginate / biomasse de la suspension colloïdale est compris entre 0,01%m et 50%m, de préférence entre 1 %m et 10 %m, par exemple 1 %m.

8. Procédé selon l'une quelconque des revendications précédentes, **caractérisé en ce que** l'étape d) est réalisée au moyen d'une buse d'injection, ayant de préférence un orifice de sortie de 1mm à 20mm de diamètre.

9. Procédé selon l'une quelconque des revendications précédentes, **caractérisé en ce que** la taille des particules de la poudre de biomasse est inférieure à 1000 µm, de préférence inférieure à 200µm.

10. Procédé selon l'une quelconque des revendications précédentes, **caractérisé en ce que** le procédé est réalisé en continu,
L'étape a) étant réalisée dans un premier réacteur (100),
L'étape b) étant réalisée dans un deuxième réacteur (200),
Le premier réacteur (100) et le deuxième réacteur (200) étant en communication fluidique avec un réservoir de mélange (300),
l'étape c) étant réalisée dans le réservoir de mélange (300), en communication fluidique avec une buse d'injection (320) disposée en regard d'une cuve (400) contenant le bain ionotropique,
la cuve (400) étant avantageusement munie d'une sonde pH (420),
la cuve (400) étant munie d'une sortie (430) disposée en regard d'un élément (500) muni d'une multitude d'ouvertures, configuré pour évacuer les billes vers un dispositif de séchage (600) et permettant de récupérer à travers les ouvertures une phase liquide, la phase liquide étant avantageusement, réinjectée dans la cuve (400).

11. Bille de biomasse adaptée pour une mise en œuvre dans un procédé de gazéification et obtenue selon le procédé selon l'une quelconque des revendications 1 à 10, comprenant un mélange homogène d'alginate et de biomasse, de préférence de l'écorce de bois.

12. Bille selon la revendication 11, **caractérisée en ce qu'**elle a un diamètre compris entre 1mm et 20mm.

13. Bille selon l'une des revendications 11 et 12, **caractérisée en ce que** le rapport d'aspect de la bille est proche de 1.

14. Procédé de gazéification comprenant une étape au cours de laquelle on gazéifie des billes de biomasse telles que définies dans l'une quelconque des revendications 11 à 13, dans un réacteur de gazéification, notamment un réacteur de gazéification à flux entrainé.

15. Utilisation de billes de biomasse, telles que définies dans l'une quelconque des revendications 11 à 13, par exemple des billes d'écorce de bois, en tant que produits adsorbants mis en œuvre dans le traitement de l'eau.
